# FASCICULE DE BREVET EUROPEEN

(11) **EP 2 365 924 B1**
(45) Date de publication et mention de la délivrance du brevet: **02.01.2013**
(21) Numéro de dépôt: 09768198.5
(22) Date de dépôt: 16.11.2009
(51) Int. Cl.: B62D 43/02

(54) **VEHICULE AUTOMOBILE COMPRENANT UN VOLET ARRIERE ET UN SUPPORT PORTANT UNE ROUE DE SECOURS, ARTICULE A LA CAISSE DU VEHICULE**
KRAFTFAHRZEUG MIT EINER HECKKLAPPE UND EINEM AM FAHRZEUGAUFBAU ANGELENKTEN ERSATZRADHALTER
MOTOR VEHICLE COMPRISING A REAR FLAP AND A SPARE WHEEL BRACKET ARTICULATED ON THE VEHICLE BODY

(30) Priorité: 15.12.2008 FR 0858562
(43) Date de publication de la demande: 21.09.2011
(73) Titulaire: Peugeot Citroën Automobiles Société Anonyme, 78140 Vélizy Villacoublay (FR)
(72) Inventeur: VERON-DELOR, Laurent, F-28130 Hanches (FR); XAVIER DE OLIVEIRA, Edson, 18190-000 Aracoiaba De Serra - Sao-paulo (BR); KORAYEM, Youssef, 03311-000 Sao-paulo (BR)
(74) Mandataire: Fosse, Danièle
(86) Numéro de dépôt international: PCT/FR2009/052191
(87) Numéro de publication internationale: WO 2010/070219

(56) Documents cités:
- GB-A- 1 127 938
- US-A- 3 371 832
- US-A- 4 869 409

## Description

La présente invention concerne un véhicule comprenant un volet arrière et un support portant une roue de secours, articulé à la caisse du véhicule, ce support pouvant être déplacé entre une première position dans laquelle la roue de secours recouvre partiellement le volet arrière et une seconde position dans laquelle le support et la roue de secours dégagent l'accès au volet arrière.

L'avantage de ce type de véhicule est que la roue de secours est située à l'extérieur du véhicule et par conséquent n'encombre pas l'espace disponible à l'intérieur du coffre arrière ou sous le plancher arrière du véhicule.

Un premier inconvénient de ce type de véhicule est que pour ouvrir le volet arrière il est nécessaire de déverrouiller le support de la caisse et de déplacer le support de la roue de secours vers la seconde position précitée dans laquelle, ce support et la roue de secours dégagent l'accès au volet arrière.

Un second inconvénient de ce type de véhicule est que le support de la roue de secours doit être équipé d'une serrure pour le verrouiller à la caisse du véhicule dans la première position précitée afin notamment d'empêcher le vol de la roue de secours et tout déplacement intempestif du support lors de la circulation du véhicule.

Cette serrure du support de la roue de secours s'ajoute ainsi à la serrure prévue pour verrouiller le volet arrière à la caisse du véhicule.

Dans la plupart des véhicules actuels, la serrure du volet arrière peut être déverrouillée au moyen d'un actionneur électrique qui est lui-même commandé par une palette ou un bouton accessible par l'utilisateur à l'extérieur du véhicule.

Dans les véhicules connus, comportant un support de roue de secours du type évoqué plus haut, la serrure de verrouillage de ce support est une serrure purement mécanique actionnée au moyen d'un câble depuis l'intérieur du véhicule. Un exemple vient d'être connu du document GB-A-1127938, qui a été pris à base du préambule de la revendication indépendante 1.

L'utilisation d'une telle serrure mécanique est peu pratique pour l'utilisateur, d'autant plus qu'il est nécessaire de l'actionner pour dégager le support de la roue de secours, chaque fois que l'on veut ouvrir le volet arrière.

On pourrait certes envisager de remplacer la serrure mécanique du support de la roue de secours par une serrure à commande électrique comme celle du volet arrière, mais dans ce cas, il faudrait prévoir une seconde palette pour commander l'actionneur de la serrure du support de la roue de secours.

Cette solution n'a pas été retenue par la Demanderesse, car sa mise en oeuvre est trop onéreuse.

Le but de la présente invention est de proposer une solution simple et peu coûteuse qui remédie aux inconvénients des véhicules dont le support de la roue de secours est équipé d'une serrure à commande mécanique.

Ce but est atteint, selon l'invention, grâce à un véhicule automobile comprenant un volet arrière équipé d'une serrure à commande électrique pour verrouiller ce volet par rapport à la caisse du véhicule, un support portant une roue de secours, articulé à la caisse et déplaçable entre une position verrouillée dans laquelle la roue de secours recouvre partiellement le volet arrière et une position déverrouillée dans laquelle le support et la roue de secours dégagent l'accès au volet arrière pour pouvoir ouvrir celui-ci, caractérisé en ce que ledit support de la roue de secours est équipé d'une serrure à commande électrique pour le verrouiller à la caisse et en ce qu'un organe de commande manuelle unique est prévu pour commander successivement l'ouverture de la serrure du support portant la roue de secours et l'ouverture de la serrure du volet.

Cet organe de commande unique peut être la palette ou le bouton de commande de la serrure du volet arrière qui est accessible à l'extérieur du véhicule.

Ainsi, l'utilisateur peut commander l'ouverture de la serrure du support de la roue de secours et l'ouverture de la serrure du volet arrière en actionnant une seule palette ou un seul bouton, ce qui est très commode pour l'utilisateur.

De plus, le fait de n'avoir qu'une palette ou bouton de commande permet de simplifier la réalisation et les coûts de fabrication.

De préférence, le véhicule automobile comprend de façon connue des moyens pour commander le déverrouillage des portes du véhicule.

Selon une particularité de la présente invention, ces moyens coopèrent avec ledit organe de commande manuelle unique de telle sorte que ce dernier puisse commander l'ouverture de la serrure du support de roue de secours et l'ouverture de la serrure du volet seulement lorsque le déverrouillage des portes a été commandé.

De préférence, les moyens pour commander le déverrouillage des portes comprennent une télécommande pouvant être actionnée par l'utilisateur.

Ainsi, tant que la télécommande n'a pas été actionnée pour déverrouiller les portes du véhicule, personne ne peut ouvrir la serrure du support de la roue de secours et la serrure du volet arrière en actionnant la palette ou le bouton prévu à cet effet.

De préférence, le véhicule automobile comprend un boîtier de contrôle de toutes les fonctions de l'habitacle du véhicule, ledit organe de commande manuelle unique, la serrure du volet arrière et la serrure du support de roue de secours étant reliés électriquement audit boîtier de contrôle pour que ledit organe de commande manuelle puisse commander successivement l'ouverture de la serrure du support de roue de secours et l'ouverture de la serrure du volet arrière.

Les véhicules du type visé par la présente invention sont souvent issus de véhicules du type monospace auxquels on a ajouté à l'arrière un support de roue de secours articulé.

L'invention permet d'effectuer cette transformation à peu de frais, car il suffit d'ajouter à l'ensemble existant déjà dans le véhicule du type monospace, à savoir le boîtier de contrôle, l'actionneur de la serrure du volet arrière et le faisceau électrique qui le relie au boîtier de contrôle, un second faisceau électrique qui relie l'actionneur de la serrure du support de la roue de secours au boîtier de contrôle.

De préférence, le boîtier de contrôle est programmé de telle sorte qu'un premier actionnement dudit organe de commande manuelle unique actionne l'actionneur de la serrure du support de roue de secours pour commander l'ouverture de cette serrure, et qu'un second actionnement dudit organe actionne la serrure du volet arrière pour commander l'ouverture de ce volet.

Selon d'autres particularités et avantages de l'invention :
- l'articulation du support de roue de secours comprend un verrou de sécurité pour maintenir ledit support en position semi-ouverte ;
- ledit verrou de sécurité est adapté en outre pour maintenir ledit support en position complètement ouverte.

D'autres particularités et avantages de la présente invention apparaîtront encore tout au long de la description ci-après.

Aux dessins annexés, donnés à titre d'exemples, non limitatifs :
- la figure 1 est une vue d'un support de roue arrière fixé à l'arrière d'un véhicule selon l'invention, ce support étant en position verrouillée au véhicule,
- la figure 2 est une vue analogue à la figure 1, le support étant en position déverrouillée et dégagée par rapport au véhicule,
- la figure 3 est une vue en coupe de la partie arrière du véhicule suivant un plan vertical situé sur l'axe longitudinal du véhicule,
- la figure 4 est une vue en perspective du support de la serrure et de l'actionneur du support de la roue de secours, fixé sur le panneau arrière du véhicule,
- la figure 5 est une vue de la face intérieure du support représenté sur la figure 4, avant montage de la serrure et de l'actionneur,
- la figure 6 est une vue de la serrure et de l'actionneur, avant leur montage dans le support,
- la figure 7 est le schéma électrique de commande des serrures du volet arrière et du support de la roue de secours.

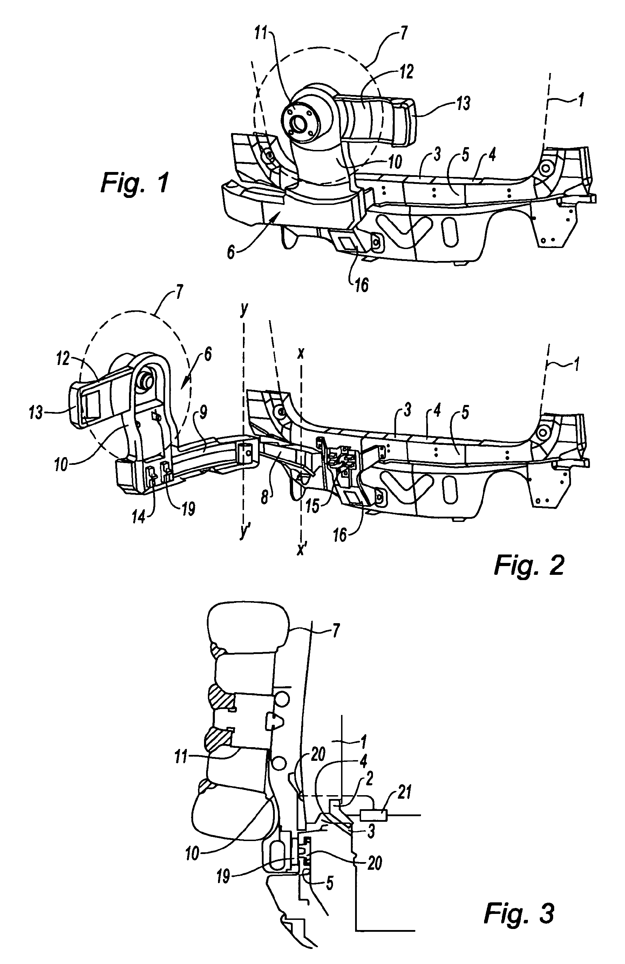

Les figures 1, 2 et 3 montrent partiellement l'arrière d'un véhicule automobile comprenant un volet arrière 1, représenté en pointillés sur les figures 1 et 2, équipé d'une serrure 2 à commande électrique (voir figure 3) coopérant avec une gâche 3 pour verrouiller ce volet 1 par rapport au bord supérieur 4 du panneau inférieur arrière 5 du véhicule.

Le véhicule comporte en outre un support 6 portant une roue de secours 7, articulé au panneau arrière 5 pour pouvoir être déplacé entre une position verrouillée dans laquelle (voir figure 1) la roue de secours 7 recouvre partiellement le volet arrière 1 et une position déverrouillée dans laquelle (voir figure 2) le support 6 et la roue de secours 7 dégagent l'accès au volet arrière 1 pour que l'utilisateur puisse ouvrir celui-ci.

Dans l'exemple représenté sur les figures 1, 2 et 3 ledit support 6 de la roue de secours est équipé d'une serrure 15 à commande électrique pour le verrouiller à la caisse 5 et un organe de commande manuelle unique 20 est prévu pour commander successivement l'ouverture de la serrure 15 du support 6 portant la roue de secours et l'ouverture de la serrure 2 du volet 1.

Le support 6 de la roue de secours 7 comprend un premier bras 8 dont une extrémité est reliée de façon articulée suivant un axe vertical X-X' au panneau inférieur arrière 5 du véhicule et dont l'autre extrémité est reliée par une articulation Y-Y' également verticale à un second bras 9 portant verticalement une platine fixe 10 comportant un organe 11 de centrage et de fixation de la roue de secours 7.

L'ensemble décrit ci-dessus peut se déplier entre une position dans laquelle (voir figure 1) les deux bras 8, 9 sont repliés contre le panneau arrière 5, la platine fixe s'étendant verticalement à faible distance du volet arrière 1, comme montré par la figure 3 et une position dans laquelle (voir figure 2) les deux bras 8, 9 sont dépliés et situés sensiblement dans le prolongement l'un de l'autre dans une direction sensiblement perpendiculaire au panneau arrière 5.

Par ailleurs, la platine verticale 10 porte sur l'un de ses côté un bras fixe 12 servant d'appui pour la roue de secours 7.

Ce bras fixe 12 comporte à son extrémité opposée à la platine 10 une poignée de préhension 13 qui permet à l'utilisateur de déplacer l'ensemble ci-dessus entre les deux positions représentées sur les figures 1 et 2.

L'extrémité du second bras 9 opposée au premier bras 8 porte (voir figure 2) sur sa face interne une gâche 14 destinée à coopérer avec une serrure 15 fixe par rapport au panneau arrière 5.

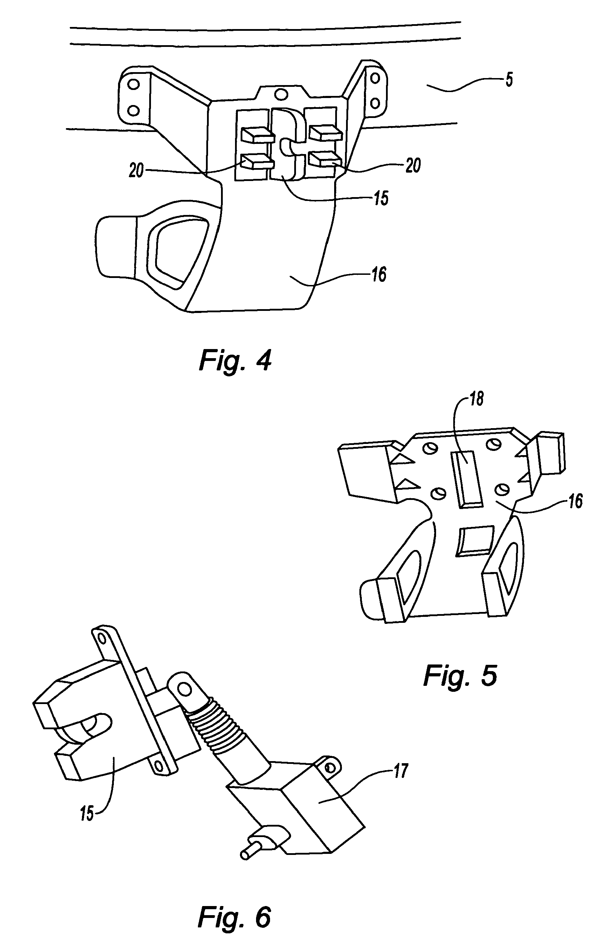

La figure 4 montre que la serrure 15 est montée dans un support 16 fixé contre le panneau inférieur arrière 5.

L'actionneur électrique 17 de commande de la serrure 15, représenté sur la figure 6, est logé dans un espace situé entre le support 16 et le panneau arrière 5 pour être protégé de l'environnement.

La serrure 15 est montée dans une ouverture 18 (voir figure 5) réalisée dans la paroi du support 16 et est fixée à cette paroi au moyen de vis (non représentées).

Lorsque la roue de secours est dans la position représentée sur les figures 1 et 3, des cales 19 disposées de part et d'autre de la gâche 14 prennent appui sur des cales 20 (voir figures 3 et 4) disposées de part et d'autre de la serrure 15.

Le verrouillage du support 6 contre le panneau arrière 5 du véhicule s'effectue en « claquant » ce support vers le panneau 5 comme dans le cas d'une porte pour que la gâche 14 vienne en prise avec le pène de la serrure 15.

Pour condamner ce verrouillage, il faut actionner électriquement l'actionneur 17 de la serrure 15.

Selon une caractéristique essentielle de la présente invention, un organe de commande manuelle unique est prévu pour commander successivement l'ouverture de la serrure 15 du support 6 portant la roue de secours 7 et l'ouverture de la serrure 2 du volet arrière 1.

Cet organe de commande manuelle unique est (voir figure 3) une palette 20 ou un bouton de commande accessible sur la face extérieure du volet arrière 1.

Cette palette 20 actionne l'actionneur 21 de la serrure 2 du volet 1.

Le véhicule est comme la plupart des véhicules équipé de moyens tels qu'une télécommande pour commander le déverrouillage des portes du véhicule.

Cette télécommande coopère avec la palette de commande manuelle unique 20 de telle sorte que cette palette 20 puisse commander l'ouverture de la serrure 15 du support 6 de roue de secours et l'ouverture de la serrure 2 du volet 1 seulement lorsque le déverrouillage des portes a été commandé au moyen de la télécommande.

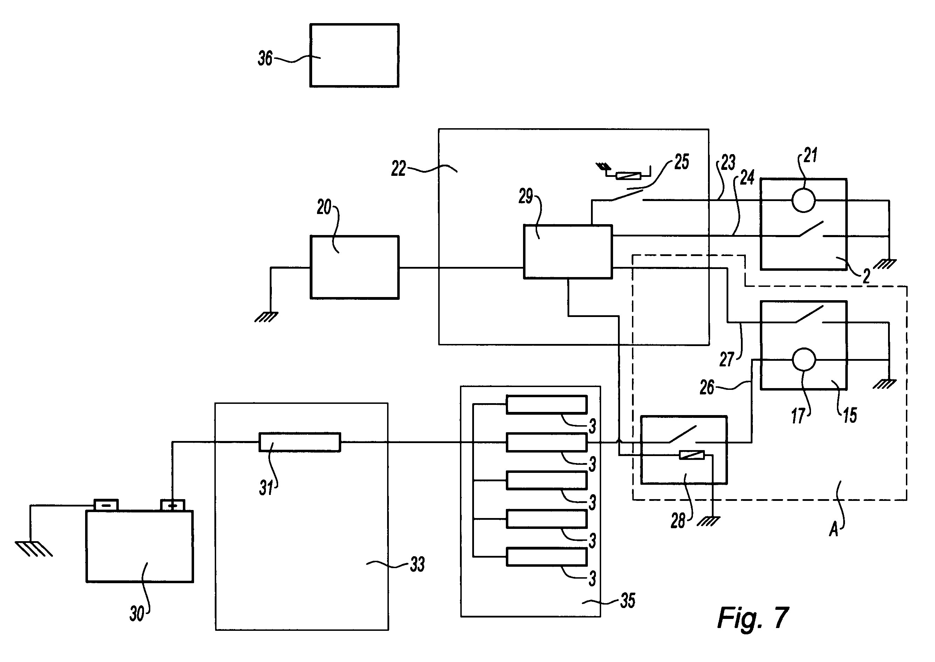

Comme montré par le schéma électrique de la figure 7, le véhicule comprend un boîtier 22 de contrôle de toutes les fonctions de l'habitacle du véhicule.

La palette de commande manuelle unique 20, la serrure 2 du volet arrière et la serrure 15 du support 6 de roue de secours sont reliés électriquement au boîtier 22 de contrôle pour que la palette 20 puisse commander successivement l'ouverture de la serrure 15 du support 6 de roue de secours et l'ouverture de la serrure 2 du volet arrière 1.

L'actionneur 21 de la serrure 2 du volet est relié au boîtier de contrôle 22 par un premier faisceau électrique 23, 24 comprenant un relais 25 et l'actionneur 17 de la serrure 15 du support 6 de roue de secours est relié au boîtier de contrôle 22 par un second faisceau électrique 26, 27 comprenant un relais 28.

Le boîtier de contrôle 22 est programmé par l'intermédiaire d'un microprocesseur 29, de telle sorte qu'un premier actionnement de la palette de commande manuelle unique 20 actionne l'actionneur 17 de la serrure 15 du support 6 de roue de secours pour commander l'ouverture de cette serrure et qu'un second actionnement de la palette 20 actionne la serrure 2 du volet arrière 1 par le biais de l'actionneur 21 pour commander l'ouverture de cette serrure 2.

Sur le schéma de la figure 7, la référence 30 désigne la batterie du véhicule, la référence 31 le fusible principal du boîtier 32 des fusibles et des relais du moteur 33, la référence 34 des fusibles du boîtier 35 des fusibles de l'habitacle.

Par ailleurs, la référence 36 désigne la télécommande utilisable par l'utilisateur pour commander l'ouverture et la fermeture des portes du véhicule.

Le bloc A en pointillés désigne le faisceau et les composants qui ont été ajoutés à un schéma existant dans un véhicule du type monospace dépourvu de support de roue de secours.

Cet ajout A se limite à l'actionneur 17 de la serrure 15 du support de la roue de secours, au faisceau électrique 26, 27 et au relais 28.

Les autres composants du schéma électrique, à savoir le boîtier de contrôle 29, la palette 20 unique de commande de l'ouverture du volet arrière, la télécommande 36, la batterie 30 et les fusibles 31 et 34 sont communs avec ceux existants dans le véhicule de base.

Par ailleurs, l'articulation Y-Y' du support 6 de roue de secours peut comprendre un verrou de sécurité (non représenté sur les figures) pour maintenir le support 6 en position semi-ouverte.

Ce verrou de sécurité peut être adapté en outre pour maintenir le support 6 en position complètement ouverte, comme indiqué sur la figure 2.

Le dispositif que l'on vient de décrire fonctionne de la façon suivante.

Dans une première étape, l'utilisateur actionne la télécommande 36 pour déverrouiller les portes.

Dans une deuxième étape, l'utilisateur actionne la palette 20 de commande de l'ouverture de la serrure 15 du support de la roue de secours, puis actionne à nouveau cette palette 20 pour déverrouiller la serrure 2 du volet arrière.

L'utilisateur peut alors tirer sur la poignée 13 pour déplier les deux bras 8 et 9 du support de la roue de secours et déplacer ce dernier vers une position semi-ouverte ou vers la position complètement ouverte représentée sur la figure 2.

L'utilisateur peut ensuite ouvrir le volet arrière 1 pour accéder au coffre du véhicule.

Pour revenir à la position initiale, après fermeture du volet arrière, il suffit de pousser sur la poignée 13 pour replier les bras 8, 9 du support de la roue de secours vers le véhicule et « claquer » l'ensemble pour que la gâche 14 vienne en prise avec le pène de la serrure 15.

## Revendications

1. Véhicule automobile comprenant un volet arrière (1) équipé d'une serrure (2) à commande électrique pour verrouiller ce volet (1) par rapport à la caisse (5) du véhicule, un support (6) portant une roue de secours (7), articulé à la caisse (5) et déplaçable entre une position verrouillée dans laquelle la roue de secours (7) recouvre partiellement le volet arrière (1) et une position déverrouillée dans laquelle le support (6) et la roue de secours (7) dégagent l'accès au volet arrière (1) pour pouvoir ouvrir celui-ci, ledit support (6) de la roue de secours étant équipé d'une serrure (15) à commande électrique pour le verrouiller à la caisse (5), un organe de commande manuelle unique (20) étant prévu pour commander successivement l'ouverture de la serrure (15) du support (6) portant la roue de secours et l'ouverture de la serrure (2) du volet (1), **caractérisé en ce que** ledit organe de commande manuelle unique (20) est une palette ou un bouton de commande accessible à l'extérieur du véhicule.

2. Véhicule automobile selon la revendication 1, **caractérisé en ce qu'**il comprend des moyens pour commander le déverrouillage des portes du véhicule qui coopèrent avec ledit organe de commande manuelle unique (20) de telle sorte que ce dernier puisse commander l'ouverture de la serrure (15) du support (6) de roue de secours et l'ouverture de la serrure (2) du volet (1) seulement lorsque le déverrouillage des portes a été commandé.

3. Véhicule automobile selon la revendication 2, **caractérisé en ce que** les moyens pour commander le déverrouillage des portes comprennent une télécommande (36) pouvant être actionnée par l'utilisateur.

4. Véhicule automobile selon l'une des revendications 1 à 3, **caractérisé en ce qu'**il comprend un boîtier (22) de contrôle de toutes les fonctions de l'habitacle du véhicule, ledit organe de commande manuelle unique (20), la serrure (2) du volet arrière (1) et la serrure (15) du support (6) de roue de secours étant reliés électriquement audit boîtier de contrôle (22) pour que ledit organe de commande manuelle (20) puisse commander successivement l'ouverture de la serrure (15) du support (6) de roue de secours et l'ouverture de la serrure (2) du volet arrière.

5. Véhicule automobile selon la revendication 4, **caractérisé en ce que** la serrure (2) de volet arrière et la serrure (15) du support (6) de roue de secours sont chacune commandée par un actionneur électrique, l'actionneur (21) de la serrure (2) du volet étant relié au boîtier de contrôle (22) par un premier faisceau électrique (23, 24) comprenant un relais (25) et l'actionneur (17) de la serrure (15) du support (6) de roue de secours étant relié au boîtier de contrôle (22) par un second faisceau électrique (26, 27) comprenant un relais (28).

6. Véhicule automobile selon l'une des revendications 4 ou 5, **caractérisé en ce que** le boîtier de contrôle (22) est programmé de telle sorte qu'un premier actionnement dudit organe de commande manuelle unique (20) actionne l'actionneur (21) de la serrure (15) du support (6) de roue de secours pour commander l'ouverture de cette serrure, et qu'un second actionnement dudit organe (20) actionne la serrure (2) du volet arrière (1) pour commander l'ouverture de ce volet.

7. Véhicule automobile selon l'une des revendications 1 à 6, **caractérisé en ce que** l'articulation du support (6) de roue de secours comprend un verrou de sécurité pour maintenir ledit support en position semi-ouverte.

8. Véhicule automobile selon la revendication 7, **caractérisé en ce que** ledit verrou de sécurité est adapté en outre pour maintenir ledit support (6) en position complètement ouverte.

9. Véhicule automobile selon l'une des revendications 1 à 8, **caractérisé en ce que** le support (6) de la roue de secours (7) comprend un premier bras (8) dont une extrémité est reliée de façon articulée au panneau inférieur arrière (5) du véhicule et dont l'autre extrémité est reliée par une articulation à un second bras (9) portant une platine fixe (10) comportant un organe (11) de centrage et de fixation de la roue de secours (7), l'ensemble pouvant se déplier entre une position dans laquelle les deux bras (8, 9) sont repliés contre le panneau arrière (5), la platine fixe (10) s'étendant verticalement à faible distance du volet arrière (1) et une position dans laquelle les deux bras (8, 9) sont dépliés et situés sensiblement dans le prolongement l'un de l'autre dans une direction sensiblement perpendiculaire au panneau arrière (5).

10. Véhicule automobile selon la revendication 9, **caractérisé en ce que** ladite platine (10) porte sur l'un de ses côté un bras fixe (12) servant d'appui pour la roue de secours (7), ce bras fixe (12) comportant à son extrémité opposée à la platine (10), un organe de préhension (13).

11. Véhicule automobile selon l'une des revendications 9 ou 10, **caractérisé en ce que** l'extrémité du second bras (9) opposée au premier bras (8) porte sur sa face interne une gâche (14) destinée à coopérer avec une serrure (15) fixée sur le panneau inférieur arrière (5) du véhicule.

12. Véhicule automobile selon la revendication 11, **caractérisé en ce que** la serrure (15) est montée dans un support (16) fixé contre le panneau inférieur arrière (5) et l'actionneur électrique (17) de commande de cette serrure (15) est logé dans un espace situé entre le support (16) et ledit panneau (5).

## Claims

1. A motor vehicle comprising a rear flap (1) fitted with an electrically operated lock (2) for locking this flap (1) with respect to the vehicle body (5), a bracket (6) carrying a spare wheel (7), said bracket being articulated on the body (5) and able to be moved between a locked position, in which the spare wheel (7) partially covers the rear flap (1), and an unlocked position in which the bracket (6) and the spare wheel (7) enable access to the rear flap (1) in order to be able to open the latter, said spare wheel bracket (6) being fitted with an electrically operated lock (15) for locking it to the body (5), a single manual control member (20) being provided in order to control successively the opening of the lock (15) of the bracket (6) carrying the spare wheel, and the opening of the lock (2) of the flap (1), **characterized in that** the said single manual control member (20) is a control paddle lever or button accessible on the exterior of the vehicle.

2. The motor vehicle according to Claim 1, **characterized in that** it comprises means for controlling the unlocking of the doors of the vehicle which cooperate with the said single manual control member (20) such that the latter can control the opening of the lock (15) of the spare wheel bracket (6) and the opening of the lock (2) of the flap (1) only when the unlocking of the doors has been controlled.

3. The motor vehicle according to Claim 2, **characterized in that** the means for controlling the unlocking of the doors comprise a remote control (36) able to be actuated by the user.

4. The motor vehicle according to one of Claims 1 to 3, **characterized in that** it comprises a control box (22) of all the functions of the passenger compartment of the vehicle, the said single manual control member (20), the lock (2) of the rear flap (1) and the lock (15) of the spare wheel bracket (6) being connected electrically to the said control box (22) so that the said manual control member (20) can control successively the opening of the lock (15) of the spare wheel bracket (6) and the opening of the lock (2) of the rear flap.

5. The motor vehicle according to Claim 4, **characterized in that** the lock (2) of the rear flap and the lock (15) of the spare wheel bracket (6) are each controlled by an electric actuator, the actuator (21) of the lock (2) of the flap being connected to the control box (22) by a first electrical wiring harness (23, 24) comprising a relay (25) and the actuator (17) of the lock (15) of the spare wheel bracket (6) being connected to the control box (22) by a second electrical wiring harness (26, 27) comprising a relay (28).

6. The motor vehicle according to one of Claims 4 or 5, **characterized in that** the control box (22) is programmed such that a first actuation of the said single manual control member (20) actuates the actuator (21) of the lock (15) of the spare wheel bracket (6) to control the opening of this lock, and a second actuation of the said member (20) actuates the lock (2) of the rear flap (1) to control the opening of this flap.

7. The motor vehicle according to one of Claims 1 to 6, **characterized in that** the articulation of the spare wheel bracket (6) comprises a safety lock to keep the said bracket in a semi-open position.

8. The motor vehicle according to Claim 7, **characterized in that** the said safety lock is further adapted to keep the said bracket (6) in a completely open position.

9. The motor vehicle according to one of Claims 1 to 8, **characterized in that** the bracket (6) of the spare wheel (7) comprises a first arm (8), one end of which is connected articulatedly to the lower rear panel (5) of the vehicle, and the other end of which is connected by an articulation to a second arm (9) carrying a fixed plate (10) comprising a centring and fixing member (11) of the spare wheel (7), the assembly being able to open out between a position in which the two arms (8, 9) are folded against the rear panel(5), the fixed plate (10) extending vertically at a small distance from the rear flap (1), and a position in which the two arms (8, 9) are opened out and situated substantially in the extension one of the other in a direction substantially perpendicular to the rear panel (5).

10. The motor vehicle according to Claim 9, **characterized in that** the said plate (10) carries on one of its sides a fixed arm (12) serving as a support for the spare wheel (7), this fixed arm (12) comprising at its opposite end to the plate (10) a gripping member (13).

11. The motor vehicle according to one of Claims 9 or 10, **characterized in that** the end of the second arm (9) opposite the first arm (8) carries on its internal face a striker (14) intended to cooperate with a lock (15) fixed on the lower rear panel (5) of the vehicle.

12. The motor vehicle according to Claim 11, **characterized in that** the lock (15) is mounted in a bracket (16) fixed against the lower rear panel (5), and the electrical actuator (17) for controlling this lock (15) is housed in a space situated between the bracket (16) and the said panel (5).

## Patentansprüche

1. Kraftfahrzeug, das eine Heckklappe (1) aufweist, die mit einem Schloss (2) mit elektrischer Steuerung zum Verriegeln dieser Heckklappe (1) in Bezug zu dem Aufbau (5) des Fahrzeugs versehen ist, einen Halter (6), der ein Ersatzrad (7) trägt, das an dem Fahrzeugaufbau (5) angelenkt ist und zwischen einer verriegelten Position, in der das Ersatzrad (7) die Heckklappe (1) teilweise abdeckt, und einer entriegelten Position, in der der Halter (6) und das Ersatzrad (7) den Zugang zu der Heckklappe (1) freigeben, um diese öffnen zu können, verlagerbar ist, wobei der Halter (6) des Ersatzrads mit einem Schloss (15) versehen ist, das elektrisch steuerbar ist, um es an dem Fahrzeugaufbau (5) zu verriegeln, wobei ein einziges manuelles Steuerelement (20) vorgesehen ist, um nacheinander das Öffnen des Schlosses (15) des Halters (6), der das Ersatzrad trägt, und das Öffnen des Schlosses (2) der Heckklappe (1) zu steuern, **dadurch gekennzeichnet, dass** das einzige manuelle Steuerelement (20) ein Steuergriff oder ein Steuerknopf ist, der an der Außenseite des Fahrzeugs zugänglich ist.

2. Kraftfahrzeug nach Anspruch 1, **dadurch gekennzeichnet, dass** es Mittel zum Steuern des Entriegelns der Türen des Fahrzeugs aufweist, die mit dem einzigen manuellen Steuerelement (20) derart zusammenarbeiten, dass dieses Letztere das Öffnen des Schlosses (15) des Ersatzradhalters (6) und das Öffnen des Schlosses (2) der Heckklappe (1) nur steuern kann, wenn das Entriegeln der Türen gesteuert wurde.

3. Kraftfahrzeug nach Anspruch 2, **dadurch gekennzeichnet, dass** die Mittel zum Steuern des Entriegelns der Türen eine Fernbedienung (36), die von dem Benutzer betätigt werden kann, aufweisen.

4. Kraftfahrzeug nach einem der Ansprüche 1 bis 3, **dadurch gekennzeichnet, dass** es ein Steuergehäuse (22) aller Fahrgastraumfunktionen des Fahrzeugs aufweist, wobei das einzige manuelle Steuerelement (20), das Schloss (2) der Heckklappe (1) und das Schloss (15) des Ersatzradhalters (6) elektrisch mit dem Steuergehäuse (22) verbunden sind, damit das manuelle Steuerelement (20) nacheinander das Öffnen des Schlosses (15) des Ersatzradhalters (6) und das Öffnen des Schlosses (2) der Heckklappe steuern kann.

5. Kraftfahrzeug nach Anspruch 4, **dadurch gekennzeichnet, dass** das Schloss (2) der Heckklappe und das Schloss (15) des Ersatzradhalters (6) jeweils von einem elektrischen Stellantrieb gesteuert werden, wobei der Stellantrieb (21) des Schlosses (2) der Heckklappe mit dem Steuergehäuse (22) durch ein erstes elektrisches Kabelbündel (23, 24) verbunden ist, das ein Relais (25) aufweist, und der Stellantrieb (17) des Schlosses (15) des Ersatzradhalters (6) mit dem Steuergehäuse (22) durch ein zweites elektrisches Kabelbündel (26, 27) verbunden ist, das ein Relais (28) aufweist.

6. Kraftfahrzeug nach einem der Ansprüche 4 oder 5, **dadurch gekennzeichnet, dass** das Steuergehäuse (22) derart programmiert ist, dass ein erstes Betätigen des einzigen manuellen Steuerelements (20) den Stellantrieb (21) des Schlosses (15) des Ersatzradhalters (6) betätigt, um das Öffnen dieses Schlosses zu steuern, und dass ein zweites Betätigen des Steuerelements (20) das Schloss (2) der Heckklappe (1) betätigt, um das Öffnen dieser Heckklappe zu steuern.

7. Kraftfahrzeug nach einem der Ansprüche 1 bis 6, **dadurch gekennzeichnet, dass** die Anlenkung des Ersatzradhalters (6) einen Sicherheitsriegel aufweist, um den Halter in halb offener Stellung zu halten.

8. Kraftfahrzeug nach Anspruch 7, **dadurch gekennzeichnet, dass** der Sicherheitsriegel ferner angepasst ist, um den Halter (6) in komplett offener Position zu halten.

9. Kraftfahrzeug nach einem der Ansprüche 1 bis 8, **dadurch gekennzeichnet, dass** der Halter (6) des Ersatzrads (7) einen ersten Arm (8) aufweist, von dem Ende gelenkig mit der hinteren unteren Tafel (5) des Fahrzeugs verbunden ist, und dessen anderes Ende durch ein Gelenk mit einem zweiten Arm (9), der eine stationäre Platte (10) trägt, die ein Zentrier- und Befestigungselement (11) des Ersatzrads (7) aufweist, verbunden ist, wobei sich die Einheit zwischen einer Position, in der die zwei Arme (8, 9) gegen die hintere Platte (5) zurückgeklappt sind, wobei sich die stationäre Platte (10) vertikal in geringer Entfernung von der Heckklappe (1) erstreckt, und einer Position, in der die zwei Arme (8, 9) aufgeklappt sind und im Wesentlichen in der Verlängerung voneinander in eine Richtung im Wesentlichen senkrecht zu der hinteren Tafel (5) liegen, auffalten kann.

10. Kraftfahrzeug nach Anspruch 9, **dadurch gekennzeichnet, dass** die Platte (10) auf einer ihrer Seiten einen stationären Arm (12) trägt, der als Auflage für das Ersatzrad (7) dient, wobei dieser stationäre Arm (12) an seinem Ende, das der Platte (10) gegenüber liegt, ein Greifelement (13) aufweist.

11. Kraftfahrzeug nach einem der Ansprüche 9 oder 10, **dadurch gekennzeichnet, dass** das Ende des zweiten Arms (9), das dem ersten Arm (8) entgegengesetzt ist, auf seiner Innenseite einen Schließhaken (14) trägt, der dazu bestimmt ist, mit einem Schloss (15), das auf der unteren hinteren Tafel (5) des Fahrzeugs befestigt ist, zusammenzuarbeiten.

12. Kraftfahrzeug nach Anspruch 11, **dadurch gekennzeichnet, dass** das Schloss (15) in einen Träger (16) montiert ist, der gegen die untere hintere Tafel (5) montiert ist, und dass der elektrische Stellantrieb (17) zum Steuern dieses Schlosses (15) in einem Raum untergebracht ist, der zwischen dem Träger (16) und der Platte (5) liegt.
